# EUROPEAN PATENT APPLICATION

(11) **EP 4 557 203 A1**
(43) Date of publication of application: **21.05.2025**
(21) Application number: 23209687.5
(22) Date of filing: 14.11.2023
(51) Int. Cl.: G06Q 30/018

(54) **METHOD AND DEVICE FOR COMMODITY ANTI-COUNTERFEITING AND TRACING BASED ON BLOCKCHAIN AND ELASTIC COMPUTE SERVICE**

(71) Applicant: Chan, Chak Kin, N.T. (HK)
(72) Inventor: Chan, Chak Kin, N.T. (HK)
(74) Representative: Isern Patentes y Marcas S.L.

(57) **Abstract**

An embodiment of the present application discloses a method and device for commodity anti-counterfeiting and tracing based on a blockchain and an elastic compute service, the method is applied to the elastic compute service with a blockchain module. The method includes: receiving an anti-counterfeiting code of a commodity sent by a terminal; searching commodity information corresponding to the anti-counterfeiting code in the blockchain module; when the commodity information is unavailable in the block module, feeding commodity query failure information back to the terminal and when the commodity information is available, feeding the commodity information back to the terminal , wherein the commodity information includes factory information and a serial number of the commodity. Through the above method, the present application can provide a reliable method for anti-counterfeiting and tracing.

## Description

### TECHNICAL FIELD

An embodiment of the present application relates to the technical field of commodity anti-counterfeiting, and in particular, relates to a method and device for commodity anti-counterfeiting and tracing based on blockchain and an elastic compute service.

### BACKGROUND

With the improvement of people's living standards, people's requirements for quality of commodities have also been improved gradually, and anti-counterfeiting capabilities are required by more and more commodities to avoid being counterfeited or faked, which otherwise would harm the interests of regular businesses and consumers.

At present, the anti-counterfeiting technology adopted by most commodities is to scan a Quick Response code (QR code) to obtain commodity tracing codes and websites, and acquire traceability information by accessing the website; however, the counterfeiting cost of this anti-counterfeiting method is low, and counterfeiters can forge commodities or anti-counterfeiting and traceability information of commodities by affixing fake markings, which makes it difficult for consumers to identify them.

### SUMMARY

A technical problem mainly solved by embodiments of the present application is to provide a method and device for commodity anti-counterfeiting and tracing based on blockchain and an elastic compute service, which can provide a reliable method for anti-counterfeiting and tracing.

In order to achieve the above objective, in a first aspect, a technical solution adopted by an embodiment of the present application is to provide a method for commodity anti-counterfeiting and tracing based on blockchain, the method is applied to an elastic compute service, a blockchain module is arranged in the elastic compute service, and the method includes the following steps:
receiving an anti-counterfeiting code of a commodity sent by a terminal;
searching commodity information corresponding to the anti-counterfeiting code in the blockchain module;
when the commodity information corresponds to the anti-counterfeiting code is unavailable in the blockchain module, feeding commodity query failure information back to the terminal; and when the commodity information corresponds to the anti-counterfeiting code is available in the blockchain module, feeding the commodity information back to the terminal, wherein the commodity information includes factory information and a serial number of the commodity.

Optionally, before the step of receiving the anti-counterfeiting code of the commodity sent by the terminal, the method further includes the following step:
receiving and storing the anti-counterfeiting code of the commodity and a first commodity information corresponding to the anti-counterfeiting code uploaded by a commodity manufacturer into the blockchain module, wherein the first commodity information includes the factory information and the serial number of the commodity.

In an embodiment, the method further includes the following step:
receiving and storing the anti-counterfeiting code of the commodity and second commodity information corresponding to the anti-counterfeiting code uploaded by a commodity distributor into the blockchain module, wherein the second commodity information includes circulation information of the commodity;
the commodity information fed back to the terminal further includes the circulation information of the commodity, when the commodity information corresponding to the anti-counterfeiting code is available in the blockchain module.

Optionally, after the step of feeding the commodity information back to the terminal, the method further includes the following step:
receiving a buyer information sent by the terminal subsequently and storing the buyer information in the blockchain module, wherein the buyer information includes a personal information, a location information and a contact information of the buyer.

Optionally, the method further includes the following step:
sending a promotion information related to the commodity to the contact information according to the personal information and the location information of the buyer information.

In a second aspect, an embodiment of the present application provides a device for commodity anti-counterfeiting and tracing based on blockchain, the device is applied to an elastic compute service, a blockchain module is arranged in the elastic compute service, and the device includes:
a first receiving unit, being configured to receive an anti-counterfeiting code of a commodity sent by a terminal;
a searching unit, being configured to search commodity information corresponding to the anti-counterfeiting code in the blockchain module;
a feedback unit, being configured to feed commodity query failure information back to the terminal, when the commodity information corresponds to the anti-counterfeiting code is unavailable in the blockchain module; and feed the commodity information back to the terminal, when the commodity information corresponding to the anti-counterfeiting code is available in the blockchain module, wherein the commodity information includes a factory information and a serial number of the commodity.

Optionally, the device further includes:
a second receiving unit, being configured to receive and store the anti-counterfeiting code of the commodity and first commodity information corresponding to the anti-counterfeiting code uploaded by the commodity manufacturer into the blockchain module, wherein the first commodity information includes the factory information and the serial number of the commodity.

In a third aspect, an embodiment of the present application further provides an elastic compute service which includes:
at least one processor; and a memory being in communication with the at least one processor, wherein the memory stores a computer program executable by the at least one processor, and the at least one processor implements the method for commodity anti-counterfeiting and tracing as described above when executing the program.

In a fourth aspect, an embodiment of the present application provides a nonvolatile computer-readable storage medium storing a computer program, and when the computer program is executed by at least one processor of an elastic compute service, the at least one processor executes the method for commodity anti-counterfeiting and tracing as described above.

Different from the related art, in the embodiment of the present application, a blockchain module is provided in the elastic compute service, and after receiving the anti-counterfeiting code of the commodity sent by the terminal, the commodity information corresponding to the anti-counterfeiting code is searched in the blockchain module; when the commodity information corresponding to the anti-counterfeiting code is unavailable in the blockchain module, then commodity query failure information is fed back to the terminal; and when the commodity information corresponding to the anti-counterfeiting code is available in the blockchain module, then the commodity information is fed back to the terminal. The embodiment of the present application provides a reliable method for anti-counterfeiting and tracing based on characteristics of blockchain of being falsification proof, decentralized and highly transparent.

### BRIEF DESCRIPTION OF THE DRAWINGS

One or more embodiments are illustrated by corresponding attached drawings, and this does not constitute limitation on the embodiments; elements with the same reference numerals in the attached drawings are shown as similar elements, and the pictures in the attached drawings do not constitute scale limitation unless otherwise stated particularly.
FIG. 1 is a schematic view of an implementation environment according to an embodiment of the present application.
FIG. 2 is a flowchart diagram of a method for commodity anti-counterfeiting and tracing provided according to an embodiment of the present application.
FIG. 3 is a schematic view of a device for commodity anti-counterfeiting and tracing provided according to an embodiment of the present application.
FIG. 4 is a schematic view of an elastic compute service provided according to an embodiment of the present application.

### DETAILED DESCRIPTION

Technical solutions in embodiments of the present application will be described with reference to the attached drawings hereinafter; obviously, the embodiments described are only part but not all of the embodiments of the present application. Based on the embodiments in the present application, all other embodiments obtained by those of ordinary skill in the art without creative labor shall belong to the scope claimed in the present application.

Unless otherwise defined, all technical and scientific terms used in this specification have the same meanings as commonly understood by those skilled in the art of the present application. In this specification, the terms used in the specification of the present application are only for the purpose of describing specific embodiments, and are not intended to limit the present application. The term "and/or" used in this specification includes any and all combinations of one or more associated items listed.

In addition, the technical features involved in different embodiments of the present application described below can be combined with each other as long as they do not conflict with each other.

The present application provides a method and system for commodity anti-counterfeiting and tracing based on blockchain, and for ease of understanding, first, the related terms of the present application are explained as follows:
1. Elastic Compute Service (ECS), which is also called cloud computing server or cloud host, uses cloud computing technology and integrates three core elements of data center: computing, network and storage; based on cluster server technology, ECS is a virtualization technology similar to VPS server, which virtualizes several parts similar to independent servers;
2. Blockchain, which is essentially a decentralized distributed database, is an innovative application mode of distributed data storage, multi-center point-to-point transmission, consensus mechanism and encryption algorithm and other technologies in the Internet era; as compared to the traditional network, blockchain has two core characteristics: one is difficulty in data falsification, and the other is decentralization; based on these two characteristics, the information recorded by blockchain is more real and reliable;
3. 2-dimensional bar code, which is a black-and-white pattern that is formed by a certain geometric figure distributed on a plane (two-dimensional direction) according to a certain rule and records data symbol information, can be divided into two categories according to the difference of composition principle and structural shape, namely, 2-dimensional stacked bar code and matrix-type QR code, both of which can be automatically read by an image input equipment or a photoelectric scanning equipment to realize automatic information processing.

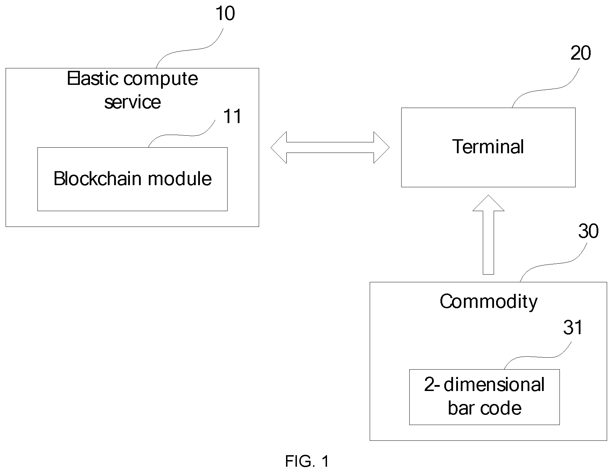

FIG. 1 is a schematic view of an implementation environment related to an embodiment of the present application, and as shown in FIG. 1, the implementation environment includes a elastic compute service 10, a terminal 20 and a commodity 30, wherein the elastic compute service 10 is in communication with the terminal 20, a blockchain module 11 is arranged in the elastic compute service 10, and the terminal 20 may scan a 2-dimensional bar code 31 on the commodity 30 and query the commodity information from the blockchain module 11 according to the 2-dimensional bar code information obtained by scanning; and when the commodity information corresponding to the 2-dimensional bar code information is unavailable in the blockchain module 11 , the elastic compute service 10 feeds commodity query failure information back to the terminal 20; otherwise, the elastic compute service 10 feeds the commodity information corresponding to the 2-dimensional bar code information back to the terminal 20 to inform the consumer of the authenticity of the commodity.

In some embodiments, the commodity information includes the factory information and a serial number of the commodity 30.

In some other embodiments, the commodity information includes the factory information, the serial number and circulation information of the commodity 30.

In other embodiments, the commodity information includes the factory information, the serial number, the circulation information and buyer information of the commodity 30.

Based on the above environment, some embodiments provided by the present application are described below.

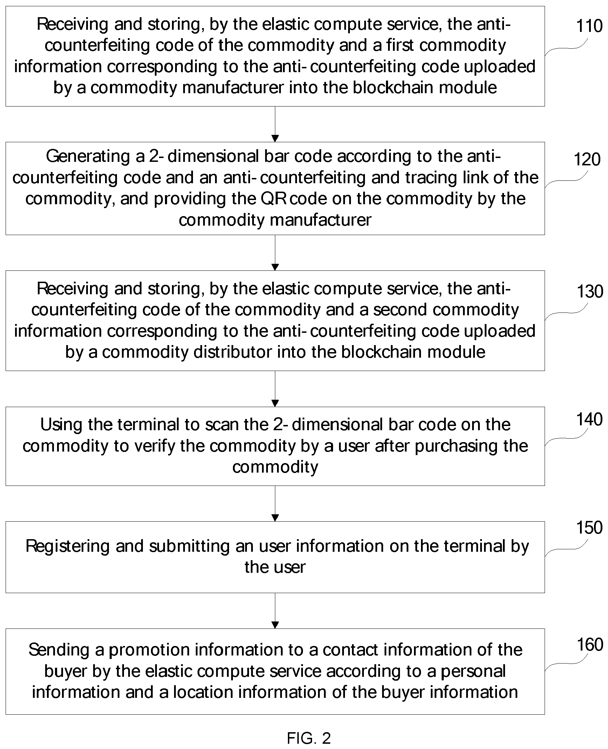

FIG. 2 is a flowchart diagram of a method for commodity anti-counterfeiting and tracing provided according to an embodiment of the present application, the method is applied to the above-mentioned elastic compute service, and as shown in FIG. 2, the method includes the following steps:

Step 110: receiving and storing, by the elastic compute service, the anti-counterfeiting code of the commodity and a first commodity information corresponding to the anti-counterfeiting code uploaded by a commodity manufacturer into the blockchain module.

Specifically, before the commodity leaves the factory, the commodity manufacturer may determine the anti-counterfeiting code of the commodity according to production information of the commodity such as production place, production workshop, production date and production batch of the day, and the anti-counterfeiting code is unique. The commodity manufacturer has a corresponding account, password and public-private key pair on the elastic compute service, the commodity manufacturer uploads the anti-counterfeiting code of the commodity and the first commodity information corresponding to the anti-counterfeiting code to the elastic compute service by using the signature and encryption technology, and the elastic compute service verifies the data uploaded by the commodity manufacturer and then stores the data in the corresponding blockchain module.

Illustratively, the first commodity information may be the factory information and the serial number of the commodity, wherein the serial number may be consistent with the anti-counterfeiting code of the commodity, or it may be additionally set according to other rules.

Step 120: generating a 2-dimensional bar code according to the anti-counterfeiting code and an anti-counterfeiting and tracing link of the commodity, and providing the generated 2-dimensional bar code on the commodity by the commodity manufacturer.

In practical application, the commodity manufacturer may print or paste the 2-dimensional bar code on the commodity, and since the 2-dimensional bar code carries the anti-counterfeiting and tracing link and the anti-counterfeiting code, users can automatically enter the query page corresponding to the anti-counterfeiting and tracing link to query commodity information by scanning the 2-dimensional bar code.

Common 2-dimensional bar code include QR code, PDF417 and Data matrix, each of which has its own advantages and specificities, and merchants may choose appropriate types of 2-dimensional bar codes according to specific application scenarios; for example, 2-dimensional bar code features large information capacity, high reliability, capability in representing various text information of Chinese characters and images, and strong confidentiality and anti-counterfeiting performance or the like; the size of Data matrix is the smallest among all bar codes at present, and thus Data matrix is especially suitable for identifying small parts and being printed directly on entities.

Step 130: receiving and storing, by the elastic compute service, the anti-counterfeiting code of the commodity and second commodity information corresponding to the anti-counterfeiting code uploaded by a commodity distributor into the blockchain module.

Similarly, the commodity distributor has a corresponding account, password and public-private key pair on the elastic compute service, and after acquiring the commodity, the commodity distributor uploads the anti-counterfeiting code of the commodity and the second commodity information corresponding to the anti-counterfeiting code to the elastic compute service by using the signature and encryption technology, and the elastic compute service verifies the data uploaded by the commodity distributor and then stores the data in the corresponding blockchain module.

Illustratively, the second commodity information is the circulation information of the commodity, and the circulation information may be the company name, city and warehousing date of the commodity distributor.

As shall be appreciated, this step is not necessary, and in practical application, the commodity manufacturer may directly make deal with consumers without commodity distributors. In the case where there are multiple levels of commodity distributors, this step may also be executed for many times; for example, in the implementation where commodity distributors are divided into provincial-level distributors and municipal-level distributors, step 130 needs to be executed twice.

Step 140: using the terminal to scan the 2-dimensional bar code on the commodity to verify the commodity by a user after purchasing the commodity.

After purchasing the commodity, a user may scan the 2-dimensional bar code on the commodity through a terminal, such as a smart phone or a tablet computer, to verify the commodity, the 2-dimensional bar code carries an anti-counterfeiting and tracing link and an anti-counterfeiting code, and the anti-counterfeiting code can be automatically filled into the query page after the terminal opens the query interface corresponding to the anti-counterfeiting and tracing link; after the user clicks the "Query" button, the terminal sends the anti-counterfeiting code to the elastic compute service described above, and the elastic compute service receives the anti-counterfeiting code of the commodities sent by the terminal, and queries the commodity information corresponding to the anti-counterfeiting code in the blockchain module according to the anti-counterfeiting code.

When the commodity information corresponding to the anti-counterfeiting code is unavailable in the blockchain module, then the elastic compute service feeds commodity query failure information back to the terminal; and when the commodity information corresponding to the anti-counterfeiting code is available in the blockchain module, then the elastic compute service feeds the commodity information back to the terminal.

In one embodiment, if the user directly purchases the commodity from the commodity manufacturer, then the commodity information obtained after querying includes the serial number and factory information of the commodity.

In another embodiment, if the user directly purchases the commodity from the commodity distributor, then the commodity information obtained after querying includes the serial number, the factory information and the circulation information of the commodity.

Step 150: registering and submitting user information on the terminal by the user.

The user may register and submit user information, such as personal information (such as age, gender, etc.), location information and contact information, on the page of the terminal after learning that the commodity he/she has purchased is genuine, the elastic compute service receives the user information submitted by the user and stores it as buyer information in the blockchain module to establish corresponding relationships between the user and the commodity.

Step 160: sending promotion information to the contact information of the buyer by the elastic compute service according to the personal information and location information in the buyer information.

Subsequently, the elastic compute service may send promotion information related to the commodity to the contact information of the buyer according to the personal information and location information in the buyer information. For example, if the commodity is a notebook computer, then the elastic compute service may send promotional information such as voice input equipment, software, mouse, or the like to the contact information of the buyer according to the personal information and location information in the buyer information; for another example, if the commodity is a smart phone, then the elastic compute service may send promotional information such as movies, food and scenic spots to the contact information of the buyer according to the personal information and location information in the buyer information.

In the embodiment of the present application, the elastic compute service receives and stores the anti-counterfeiting code of the commodity and the first commodity information corresponding to the anti-counterfeiting code uploaded by a commodity manufacturer in the blockchain module, the commodity manufacturer generates a 2-dimensional bar code according to the anti-counterfeiting code and the anti-counterfeiting and tracing link of the commodity, and provides the generated 2-dimensional bar code on the commodity; subsequently, after purchasing the commodity, the user may scan the 2-dimensional bar code on the commodity by using the terminal to verify the commodity; because the data in the blockchain module cannot be falsified, the method for commodity anti-counterfeiting and tracing based on blockchain can provide users with reliable anti-counterfeiting and traceability information.

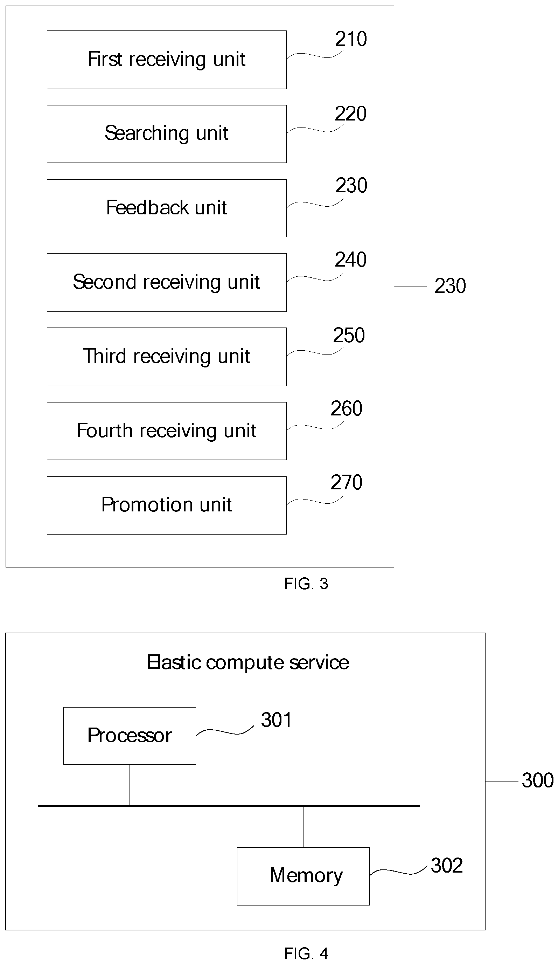

An embodiment of the present application further provides a device for commodity anti-counterfeiting and tracing, the device is applied to the elastic compute service described above, and as shown in FIG. 3, a device 200 for commodity anti-counterfeiting and tracing provided according to the embodiment of the present application includes:
a first receiving unit 210, being configured to receive an anti-counterfeiting code of a commodity sent by a terminal;
a searching unit 220, being configured to search commodity information corresponding to the anti-counterfeiting code in the blockchain module;
a feedback unit 230, being configured to feed commodity query failure information back to the terminal, when the commodity information corresponding to the anti-counterfeiting code is available in the blockchain module; and feed the commodity information back to the terminal, when the commodity information corresponding to the anti-counterfeiting code is available in the blockchain module, wherein the commodity information includes factory information and a serial number of the commodity.

Optionally, the device 200 further includes:
a second receiving unit 240, being configured to receive and store the anti-counterfeiting code of the commodity and first commodity information corresponding to the anti-counterfeiting code uploaded by the commodity manufacturer into the blockchain module, wherein the first commodity information includes the factory information and the serial number of the commodity.

Optionally, the device 200 further includes:
a third receiving unit 250, being configured to receive and store the anti-counterfeiting code of the commodity and second commodity information corresponding to the anti-counterfeiting code uploaded by a commodity distributor into the blockchain module, wherein the second commodity information includes circulation information of the commodity;
when the commodity information corresponding to the anti-counterfeiting code is available in the blockchain module, then the commodity information fed back to the terminal by the feedback unit 230 further includes the circulation information of the commodity.

Optionally, the device 200 further includes:
a fourth receiving unit 260, being configured to receive buyer information subsequently sent by the terminal and store the buyer information in the blockchain module, wherein the buyer information includes personal information, location information and contact information of the buyer.

Optionally, the device 200 further includes:
a promotion unit 270, being configured to send promotion information to the corresponding contact information according to the personal information and the location information in the buyer information.

Optionally, the anti-counterfeiting code is obtained by the terminal through scanning the 2-dimensional bar code on the commodity.

It shall be noted that since the device embodiment and the method embodiment among the embodiments of the present application are based on the same inventive concept, the technical contents in the method embodiment are also applicable to the device embodiment, and thus, the technical contents in the device embodiment that are the same as those in the method embodiment will not be further described herein.

An embodiment of the present application further provides an elastic compute service, referring to FIG. 4, the elastic compute service includes one or more processors 301 and a memory 302, and one processor 301 is taken as an example in FIG. 4. The processor 301 and the memory 302 may be connected by a bus or other means, and the bus connection is taken as an example in FIG. 4.

As a nonvolatile computer-readable storage medium, the memory 302 may be used to store nonvolatile software programs, nonvolatile computer executable programs and modules, such as program instructions/modules (e.g., the modules shown in FIG. 3) corresponding to the method for commodity anti-counterfeiting and tracing in the embodiment of the present application. By running the nonvolatile software programs, instructions and modules stored in the memory 302, the processor 301 executes various functional applications and data processing of the device for commodity anti-counterfeiting and tracing, i.e., implements the method for commodity anti-counterfeiting and tracing provided by the above method embodiment and the functions of various modules of the above device embodiment.

The memory 302 may include a high-speed random access memory, and may also include a nonvolatile memory, such as at least one magnetic disk memory device, flash memory device, or other nonvolatile solid-state memory devices. In some embodiments, the memory 302 optionally includes memories remotely provided relative to the processor 301, and these remote memories may be connected to the processor 301 through a network. Examples of the above network include, but not limited to, the Internet, Intranet, local area networks, mobile communication networks and combinations thereof.

The program instructions/modules are stored in the memory 302, and when executed by the one or more processors 301, the program instructions/modules execute the method for commodity anti-counterfeiting and tracing in the above method embodiment, and they may also implement the modules shown in FIG. 3.

An embodiment of the present application further provides a nonvolatile computer storage medium storing a computer program, and the computer program is used to be executed by one or more processors of the elastic compute service, such as one processor 301 in FIG. 4, such that the one or more processors can execute the method for commodity anti-counterfeiting and tracing in the above method embodiment and can also realize the functions of the modules described in FIG. 3.

The product described above may execute the method provided according to the embodiments of the present application, and have corresponding functional modules and beneficial effects for executing the method. For technical details not described in detail in this embodiment, reference may be made to the method provided according to the embodiment of the present application.

From the description of the above embodiments, those of ordinary skill in the art may clearly appreciate that each embodiment may be realized by means of software plus a general hardware platform, and of course, it may also be realized by hardware. As shall be appreciated by those of ordinary skill in the art, the implementation of all or part of the processes in the embodiments of the methods described may be completed by instructing related hardware through a computer program, and the program may be stored in a computer-readable storage medium, and when it is executed, the program may include the processes of the embodiments of the methods as described. The storage medium may be a Read-Only Memory (ROM) or a Random Access Memory (RAM) or the like.

Finally, it shall be noted that, the above embodiments are only used to illustrate the technical solutions of the present application, and are not intended to limit the present application; under the idea of the present application, technical features in the above embodiments or different embodiments may also be combined, the steps may be implemented in any order, and many other variations in different aspects of the present application as described above are possible, and these variations are not provided in details for conciseness; although the present application has been described in detail with reference to the foregoing embodiments, those of ordinary skill in the art shall appreciate that, the technical solutions described in the foregoing embodiments may still be modified or some of the technical features may be equivalently replaced; and these modifications or replacements do not make the essence of the corresponding technical solutions deviate from the scope of the technical solutions of various embodiments of the present application.

## Claims

1. A method for commodity anti-counterfeiting and tracing based on blockchain being applied to an elastic compute service, being **characterized in that**, a blockchain module is arranged in the elastic compute service, and the method comprises:
receiving an anti-counterfeiting code of a commodity sent by a terminal;
searching a commodity information corresponding to the anti-counterfeiting code in the blockchain module;
when the commodity information corresponding to the anti-counterfeiting code is unavailable in the blockchain module, feeding a commodity query failure information back to the terminal; and
when the commodity information corresponding to the anti-counterfeiting code is available in the blockchain module, feeding the commodity information back to the terminal, wherein the commodity information comprises a factory information and a serial number of the commodity.

2. The method according to Claim 1, being **characterized in that**, before the step of receiving the anti-counterfeiting code of the commodity sent by the terminal, the method further comprises:
receiving and storing the anti-counterfeiting code of the commodity and a first commodity information corresponding to the anti-counterfeiting code uploaded by the commodity manufacturer into the blockchain module, wherein the first commodity information comprises the factory information and the serial number of the commodity.

3. The method according to claim 2, being **characterized in that**, the method further comprises:
receiving and storing the anti-counterfeiting code of the commodity and a second commodity information corresponding to the anti-counterfeiting code uploaded by a commodity distributor into the blockchain module, wherein the second commodity information comprises circulation information of the commodity;
wherein the commodity information fed back to the terminal further comprises the circulation information of the commodity, when the commodity information corresponding to the anti-counterfeiting code is available in the blockchain module.

4. The method according to Claim 1, being **characterized in that**, after the step of feeding the commodity information back to the terminal, the method further comprises:
Receiving a buyer information sent by the terminal and storing the buyer information in the blockchain module, wherein the buyer information comprises a personal information, a location information and a contact information of the buyer.

5. The method according to Claim 4, being **characterized in that**, the method further comprises:
sending a promotion information related to the commodity to the contact information, according to the personal information and the location information of the buyer information.

6. The method according to Claim 1, being **characterized in that**, the anti-counterfeiting code is obtained by the terminal through scanning a 2-dimensional bar code on the commodity.

7. An elastic compute service, being **characterized in that**, comprising:
at least one processor; and a memory being in communication with the at least one processor, wherein the memory stores a computer program executable by the processor, and the at least one processor implements the method for commodity anti-counterfeiting and tracing according to Claim 1when executing the program.

8. A nonvolatile computer-readable storage medium, being **characterized in that**, the computer-readable storage medium storing a computer program, and when the computer program is executed by at least one processor of an elastic compute service, the processor executes the method for commodity anti-counterfeiting and tracing according to Claim 1.
